# FASCICULE DE BREVET EUROPEEN

(11) **EP 4 126 790 B1**
(45) Date de publication et mention de la délivrance du brevet: **01.10.2025**
(21) Numéro de dépôt: 21715273.5
(22) Date de dépôt: 30.03.2021
(51) Int. Cl.: G01S 7/03, C04B 35/26

(54) **PROCÉDÉ D'OBTENTION D'UN FERRITE SPINELLE DE NICKEL ZINC COBALT SOUS FORME CÉRAMIQUE**
VERFAHREN ZUR HERSTELLUNG EINES NICKEL-ZINK-KOBALT-SPINELLFERRITS IN KERAMIKFORM
METHOD FOR PRODUCING A NICKEL ZINC COBALT SPINEL FERRITE IN CERAMIC FORM

(30) Priorité: 31.03.2020 FR 2003212
(43) Date de publication de la demande: 08.02.2023
(73) Titulaire: Universite Brest Bretagne Occidentale, 29200 Brest (FR)
(72) Inventeur: MATTEI, Jean-Luc, 29280 LOCMARIA-PLOUZANE (FR); SOURIOU, David, 30128 GARONS (FR)
(74) Mandataire: Santarelli
(86) Numéro de dépôt international: PCT/EP2021/058371
(87) Numéro de publication internationale: WO 2021/198302

(56) Documents cités:
- EP-A1- 0 247 681
- SOURIOU DAVID ET AL: "Influential parameters on electromagnetic properties of nickel-zinc ferrites for antenna miniaturization", JOURNAL OF APPLIED PHYSICS, AMERICAN INSTITUTE OF PHYSICS, US, vol. 107, no. 9, 6 May 2010 (2010-05-06), pages 9A518 - 9A518, XP012134199, ISSN: 0021-8979, DOI: 10.1063/1.3356235
- MATHUR ET AL: "Effect of nanoparticles on the magnetic properties of Mn-Zn soft ferrite", JOURNAL OF MAGNETISM AND MAGNETIC MATERIALS, ELSEVIER, AMSTERDAM, NL, vol. 320, no. 7, 17 November 2007 (2007-11-17), pages 1364 - 1369, XP022511169, ISSN: 0304-8853, DOI: 10.1016/J.JMMM.2007.11.008
- THAKUR ET AL: "Study of dielectric behaviour of Mn-Zn nano ferrites", JOURNAL OF PHYSICS AND CHEMISTRY OF SOLIDS, PERGAMON PRESS, LONDON, GB, vol. 68, no. 3, 23 February 2007 (2007-02-23), pages 378 - 381, XP005903485, ISSN: 0022-3697, DOI: 10.1016/J.JPCS.2006.11.028

## Description

L'invention porte sur le domaine des matériaux magnétoélectriques, en particulier des ferrites spinelles et de leur procédé d'obtention.

L'invention porte en particulier sur un procédé d'obtention d'un matériau de type ferrite spinelle sous forme céramique, particulièrement adapté à être mis en oeuvre afin de former une antenne, notamment une antenne V/UHF (selon l'acronyme anglophone « Very/Ultra High Frequency ») dans le but d'en réduire les dimensions. Les antennes V/UHF sont couramment employées pour les communications dans le domaine aéronautique.

La présente invention porte ainsi en particulier sur la miniaturisation d'antennes aéroportées V/UHF, notamment pour la bande de fréquence 118 MHz-174 MHz. De telles antennes peuvent équiper des aéronefs, et l'invention tend ainsi en particulier au réduction du nombre, du poids, et de la taille des antennes portées par un appareil. Elle peut également être appliquée à la création d'antenne de taille réduite particulièrement adaptées à l'Internet des objets.

Parmi les nombreuses techniques permettant de réduire la taille des antennes, la technique la plus répandue utilise les propriétés diélectriques des matériaux. Une telle solution s'avère relativement efficace selon le type d'antenne mais elle introduit généralement des limitations quant aux performances de l'antenne. Les matériaux diélectriques à forte permittivité permettent une réduction significative de la taille de structures rayonnantes telles que les antennes du type microruban. Mais cela conduit à une baisse importante de leur bande passante et de l'efficacité de rayonnement offertes par l'antenne.

Il a récemment été démontré, au moins théoriquement, que l'utilisation d'un matériau magnéto-diélectrique (c'est-à-dire ayant à la fois une susceptibilité magnétique et une permittivité diélectrique non nulles) était plus avantageuse car elle limite les pertes en bande passante et augmente l'efficacité de rayonnement, tout en permettant une réduction significative des dimensions d'une antenne mettant en oeuvre un tel matériau.

Des travaux plus anciens sur le sujet sont connus, suggérant que l'emploi d'un matériau magnéto-diélectrique pouvait améliorer la bande passante des antennes d'un facteur trois par rapport aux antennes fondées sur d'autres techniques, pour de petites antennes. Néanmoins, la mauvaise disponibilité de matériaux adaptés dans des conditions acceptables, tant en termes de coûts que de facilité d'obtention à une échelle suffisante, semble être l'un des problèmes qui a freiné le développement de ces travaux et l'obtention de résultats concrets, et elle reste à ce jour un problème important.

En effet, ces matériaux ne sont pas naturellement disponibles avec les propriétés souhaitées aux fréquences d'intérêt (par exemple pour la bande de fréquence précité de 118 MHz à 174 MHz), à savoir notamment une forte perméabilité, de faibles pertes, et une faible conductivité.

En particulier, les ferrites spinelles sous forme de céramiques denses, ayant une porosité inférieure à 2%, sont couramment utilisés aux fréquences inférieures à 300MHz en raison de leur perméabilité élevée, et de leur faible conductivité électrique. De tels ferrites spinelles font appel à des oxydes Ni-Zn, Mg, Li, ainsi qu'à leurs dérivés. Cependant les ferrites spinelles sous une telle forme dense ne sont pas adaptés à toutes les applications, notamment aux antennes de communication aéroportées, en raison des fortes pertes de nature magnétique qui sont liées au phénomène de résonance de spin, dont l'existence est liée à la dimension des grains qui constituent la céramique.

Certaines propriétés d'un premier matériau magnéto-diélectrique de type ferrite spinelle ont été divulguées dernièrement dans l'article scientifique « Miniaturisation d'une antenne monopole large bande utilisant des matériaux magnéto-diélectriques en bande VHF », par A. Kabalan et al., présenté dans le cadre des vingtièmes Journées Nationales Microondes du 16 au 19 mai 2017. Ce document évoque un matériau de formule brute Ni_{0,6}Zn_{0,35}Co_{O,05}Fe_{1,98}O₄, dans une forme permettant l'obtention de propriétés souhaitées en termes de perméabilité, de permittivité, et de pertes magnétiques et diélectriques. SOURIOU DAVID ET AL: "Influential parameters on electromagnetic properties of nickel-zinc ferrites for antenna miniaturization",JOURNAL OF APPLIED PHYSICS, AMERICAN INSTITUTE OF PHYSICS, US, vol. 107, no. 9, 6 mai 2010 (2010-05-06), pages 9A518-9A518, divulgue un procédé d'obtention d'un ferrite spinelle de nickel zinc cobalt sous forme céramique.

La présente invention porte sur un procédé d'obtention optimisé de ce matériau ou d'autres matériaux magnéto-diélectrique du type ferrite spinelle aux propriétés adaptées à l'emploi de ce matériau dans une antenne du type V/UHF.

En particulier, l'invention porte sur un procédé d'obtention d'un ferrite spinelle de nickel zinc cobalt sous forme céramique comportant les étapes successives suivantes :
- obtention d'un précipité d'hydroxydes de fer, de nickel, de zinc et de cobalt par co-précipitation;
- rinçage du précipité afin d'obtenir un précipité rincé ;
- séchage et broyage du précipité rincé afin d'obtenir une poudre ;
- mise en forme d'un compact par pressage de la poudre ;et
- frittage du compact.

L'étape de frittage comporte successivement :
- une montée en température progressive à raison de 2°C à 4°C par minute, depuis une température ambiante et jusqu'à une température maximale comprise entre 950°C et 1010°C,
- un maintien à la température maximale pendant quarante-cinq minutes à trois heures, et de préférence entre quarante-cinq minutes et une heure et quinze minutes, et
- une descente progressive en température à raison de 2°C à 4°C par minute jusqu'à la température ambiante.

Le procédé objet de l'invention permet ainsi la réalisation d'un matériau ferrite spinelle de nickel zinc cobalt sous forme céramique notamment adapté à la fabrication d'antennes miniatures. Le procédé proposé permet cette obtention de manière simple, et offre un gain de temps et un gain en termes de coûts importants comparativement aux procédés d'obtention de ferrites spinelles connus dans l'état de la technique. Le traitement thermique appliqué lors de l'étape de frittage permet en particulier l'obtention d'un matériau ayant les propriétés souhaitées.

De préférence, ladite température maximale est comprise entre 985°C et 1010°C, et est de préférence égale à 995°C.

Cela permet de supprimer les ions Fe²⁺ et d'améliorer ainsi les propriétés diélectriques du matériau.

La montée en température peut avantageusement être réalisée à raison d'environ 3°C par minute, et la descente en température peut être réalisée à raison d'environ 3°C par minute.

L'étape de rinçage du précipité peut comporter une succession de nettoyages du précipité, chaque nettoyage comportant une dilution avec une eau à une température initiale supérieure ou égale à 70°C ou chauffée lors dudit nettoyage du précipité à une température supérieure ou égale à 70°C, suivie d'un refroidissement et d'une sédimentation. Un tel rinçage à chaud limite fortement le nombre de nettoyages du précipité à réaliser lors du procédé.

En dehors des cinq étapes précitées, le procédé peut ne comporter aucune autre étape, et notamment aucun chamottage de la poudre. Pour les applications visées, la Demanderesse a constaté qu'un tel chamottage (également appelé « calcination »), systématiquement réalisé lors de la fabrication de céramiques analogues à celles produites dans l'invention, était non seulement inutile mais néfaste à l'obtention des propriétés magnétiques et diélectriques souhaitées.

L'étape d'obtention du précipité peut comprendre un mélange d'une solution saline de chlorure de fer III FeCl₃, de chlorure de zinc ZnCl₂ et de chlorure de cobalt CoCl₂ et d'une solution de soude.

Selon des modes alternatifs de réalisation de l'invention, l'étape d'obtention du précipité peut mettre en oeuvre la réaction :

0,60 NiCl₂ + 0,35 ZnCl₂ + 0,05 CoCl₂ + 1,98 FeCl₃ + 7,94 NaOH

→7 Ni_{0,60}Zn_{0,35}Co_{0,05}Fe_{1,98}(OH)_{7,94} + 7,94 NaCl.

ou la réaction :

0,61 NiCl₂ + 0,35 ZnCl₂ + 0,04 CoCl₂ + 1,98 FeCl₃ + 7,94 NaOH

→7 Ni_{0,61}Zn_{0,35}Co_{0,04}Fe_{1,98}(OH)_{7,94} + 7,94 NaCl.

Lors de l'étape de rinçage du précipité (2), des nettoyages successifs du précipité sont par exemple réalisés au rythme d'un nettoyage par jour environ jusqu'à l'obtention d'un pH inférieur à 8 après sédimentation.

L'étape de mise en forme d'un compact peut comporter une opération de matriçage, une opération de compression sur lit de poudre, et une opération d'éjection du compact.

L'invention porte également sur un procédé de fabrication d'une antenne destinée à des fréquences inférieures à un gigahertz mettant en oeuvre un procédé d'obtention d'un ferrite spinelle de nickel zinc cobalt sous forme céramique selon l'une quelconque des revendications précédentes.

D'autres aspects de l'invention apparaitront encore dans les exemples détaillés fournis ci-après.

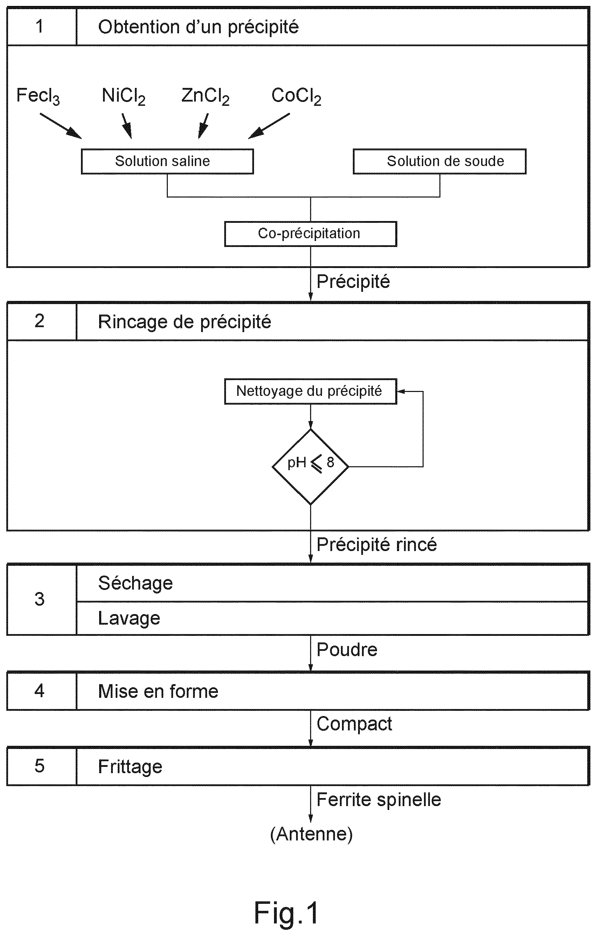

La figure 1 (figure unique) représente selon un logigramme un procédé conforme à un mode de réalisation de l'invention, repris dans les exemples n°1, n°2 et n°3 détaillés ci-après.

### Exemple n°1

Le premier exemple détaillé ci-après porte sur l'élaboration du matériau de formule brute Ni_{0,60}Zn_{0,35}Co_{o,05}Fe_{1,98}O₄, sous une forme adaptée à la réalisation d'antennes, notamment pour des gammes de fréquences sub-gigahertz adaptées aux antennes V/UHF.

Le procédé d'élaboration comporte les étapes 1 à 5 suivantes, qui sont détaillées dans le présent exemple :
- Obtention d'un précipité (1) par co-précipitation chimique;
- Nettoyage du précipité (2) ;
- Séchage et broyage (3) du précipité ;
- Mise en forme (3) de compacts par pressage ; et
- Frittage (5) des compacts.

### Obtention d'un précipité (1) par co-précipitation chimique

Le matériau de type ferrite, de formule brute Ni_{0,6}Zn_{0,35}Co_{0,05}Fe_{1,98}O₄, est obtenu sous la forme d'un précipité dans cette première étape par co-précipitation de sels de chlorures dans une solution de soude.

Les sels de chlorures utilisés sont les suivants :
- le chlorure de fer (III) hexahydraté, de formule chimique brute FeCl₃, 6H₂O ; de masse molaire 270,30 g.mol⁻¹ ; ce produit étant désigné par la suite dans ce premier exemple par le terme « FeCl₃ » ;
- le chlorure de nickel hexahydraté, de formule chimique brute NiCl₂, 6H₂O ; de masse molaire 237,71 g.mol⁻¹; désigné par la suite dans ce premier exemple par le terme « NiCl₂ » ;
- le chlorure de zinc ZnCl₂ ; de masse molaire 136,30 g.mol⁻¹; désigné par la suite dans ce premier exemple par le terme « ZnCl₂ »;et
- le chlorure de cobalt hexahydraté, de formule chimique brute CoCl₂, 6H₂O; de masse molaire 237,93 g.mol⁻¹; désigné par la suite dans ce premier exemple par le terme « CoCl₂ ».

Selon la composition désirée pour le matériau ferrite, les différents sels de chlorures sont pesés de sorte à avoir une masse totale de 20 grammes de sels de chlorures, tout en respectant la stœchiométrie des éléments métalliques du matériau final.

Les pesées sont réalisées dans une balance METTLER TOLEDO, modèle XS203S à l'aide d'une coupelle en verre.

La préparation d'un matériau ferrite conforme au présent premier exemple à partir de 20 grammes de sels de chlorures nécessite la réalisation des pesées suivantes :
14,515 g de FeCl₃,
3,868 g de NiCl₂,
1,294 g de ZnCl₂, et
0,323 g de CoCl₂.

Après chaque pesée, le contenu de la coupelle en verre est versé dans un becher de 500 mL contenant 100 mL d'eau déionisée. La coupelle de verre est rincée au-dessus de ce becher à l'aide d'une pissette contenant 150 mL d'eau déionisée. Seule une partie arbitraire du contenu de la pissette est utilisée pour chaque rinçage. La coupelle est considérée comme rincée lorsqu'il n'est plus possible d'y distinguer un cristal de sel de chlorure à l'oeil nu. La coupelle est séchée à l'aide d'une feuille de papier absorbant, puis replacée dans la balance pour la pesée suivante. Lorsque tous les sels de chlorures ont été pesés et versés dans le becher, et la coupelle rincée, l'eau déionisée restant contenue dans la pissette est intégralement versée dans le becher qui contient alors les 20 grammes de sels et 250 mL d'eau déionisée. Une agitation manuelle à l'aide d'une spatule en fer permet d'homogénéiser la solution saline et accélère la dissolution des sels de chlorures. La dissolution complète des sels de chlorures dans l'eau déionisée est constatée au bout de 5 minutes.

Cette solution est désignée par la suite dans ce premier exemple par l'expression « solution saline ».

Une solution de soude est préparée à partir de :
- 1,6 litre d'eau déionisée contenu dans un erlenmeyer ayant une contenance de 3 litres, et à l'intérieur duquel se trouve un barreau aimanté ;
- 26,00 grammes de pastilles de soude, de formule chimique NaOH et de masse molaire 39,997 g.mol⁻¹, pesées dans la balance METTLER TOLEDO, modèle XS203S à l'aide d'une coupelle en verre ;et
- une pissette contenant 0,2 litre d'eau déionisée.

L'erlenmeyer contenant 1,6 litre d'eau et le barreau aimante, est placé sur une plaque chauffante magnétique Fisher Scientific Isotemp avec laquelle il est possible de régler une température de chauffe ainsi que la vitesse de rotation du barreau aimante afin de maintenir un milieu liquide sous agitation.

Pour la synthèse du matériau objet du présent premier exemple, la plaque chauffante est réglée à une température de chauffe de 430°C avec une vitesse de rotation du barreau aimanté réglée à 300 tours par minute.

Les pastilles de soude pesées sont introduites dans l'erlenmeyer, la coupelle en verre ayant contenu les pastilles de soude est rincée à l'aide de l'intégralité du contenu de la pissette d'eau déionisée ; cette eau de rinçage étant intégralement versée dans l'erlenmeyer. Les pastilles de soude sont alors dissoutes dans 1,8 L d'eau déionisée, cette solution, désignée par la suite dans le présent exemple par l'expression « solution basique » est portée à ébullition sous agitation magnétique.

Lorsque la solution basique arrive à ébullition, la température de chauffe de la plaque chauffante est réglée à 330°C et la vitesse de rotation du barreau aimante maintenue à 300 tours par minute.

La solution saline permettant la synthèse du matériau ferrite objet du présent premier exemple est versée dans la solution basique.

Les sels de chlorures réagissent avec la soude conduisant à la formation d'un précipité brun de formule chimique brute Ni_{0,60}Zn_{0,35}Co_{0,05}Fe_{1,98}(OH)_{7,94} et de chlorure de sodium NaCl selon la réaction suivante :

0,60 NiCl₂ + 0,35 ZnCl₂ + 0,05 CoCl₂ + 1,98 FeCl₃ + 7,94 NaOH

→7 Ni_{0,60}Zn_{0,35}Co_{0,05}Fe_{1,98}(OH)_{7,94} + 7,94 NaCl

La solution de basique contenant une quantité excessive de soude par rapport à la quantité nécessaire pour réagir avec les sels de chlorures, l'erlenmeyer contient après cette réaction :
- un précipité brun à partir duquel le matériau ferrite sera synthétisé ; et
- le reste de la solution basique n'ayant pas participé à la réaction et du chlorure de sodium NaCl dissout (cet ensemble étant désigné par la suite dans le présent exemple par l'expression « excès de solution basique »).

Les solutions saline et basique sont laissées à réagir pendant 45 minutes sous agitation et sous ébullition. Au terme des 45 minutes, l'agitation magnétique et la chauffe sont arrêtées et l'erlenmeyer est retiré de la plaque chauffante. Le barreau magnétique est récupéré à l'aide d'un aimant et est rincé à l'eau déionisée. Le contenu de l'erlenmeyer, à savoir le précipité brun et l'excès de solution basique, est versé dans un becher ayant une contenance de 3 litres. L'intérieur de l'erlenmeyer est rincé à l'aide d'une pissette d'eau distillée et cette eau de rinçage est versée dans le becher contenant le précipité et l'excès de solution basique. Le contenu du becher est laissé à refroidir à température ambiante et jusqu'à ce que le précipité ait sédimenté au fond du becher et que l'excès de solution basique soit clair. Lorsque ces conditions sont remplies, on passe à l'étape de rinçage ou nettoyage du précipité.

### Rinçage du précipité (2)

L'excès de solution basique est évacué autant que possible dans un récipient adapté. L'évacuation est interrompue lorsque le précipité est sur le point de commencer à être également évacué. Il reste alors dans le becher :
- le précipité brun, et
- un reste de solution basique en excès qui n'a pas été évacué afin d'éviter toute perte de précipité brun.

Cette opération permet d'éliminer en grande partie l'excès de soude et le chlorure de sodium NaCl formé pendant la réaction chimique.

Un autre erlenmeyer ayant une contenance de 3 litres est rempli avec 2 litres d'eau déionisée.

Cet erlenmeyer est placé sur la plaque chauffante. La plaque chauffante est réglée à une température de chauffe de 430°C afin de porter l'eau déionisée contenue dans l'erlenmeyer à ébullition. Au bout de 30 minutes, l'eau déionisée arrive à ébullition, et le contenu de l'erlenmeyer est alors versé dans le becher qui contient alors :
- le précipité brun, et
- le reste de solution basique qui est désormais dilué du fait de l'ajout d'eau déionisée (cet ensemble étant désigné dans la suite du présent premier exemple par le terme « liquide »).

Cette opération est désignée par l'expression « nettoyage de la préparation » et est réalisée une fois par jour.

Après l'opération de nettoyage de la préparation, le contenu du becher est laissé à refroidir à température ambiante jusqu'à ce que le précipité ait sédimenté au fond du becher et que le liquide soit clair.

Le pH du liquide est mesuré à l'aide d'un pH-mètre. Si le pH mesuré est supérieur à 8, un maximum de liquide est évacué dans un récipient adapté tout en évitant d'évacuer le précipité et un nouveau nettoyage de la préparation est alors effectué.

Cette séquence est répétée jusqu'à obtention d'un pH inférieur à 8. Cette condition est généralement atteinte au bout de 5 nettoyages de la préparation (soit au bout de 5 jours).

Le nombre de nettoyages de la préparation nécessaires peut varier en fonction de la quantité de liquide qui a pu être évacuée au cours de chaque opération de nettoyage de la préparation.

Lorsque le liquide a un pH inférieur à 8, un maximum de liquide est évacué dans un récipient adapté tout en évitant d'évacuer le précipité.

Il est alors possible de passer à l'étape de séchage et broyage du précipité.

### Séchage et broyage (3) du précipité

Le précipité brun et le reste de liquide seront désignés par la suite pour le présent exemple par le terme « préparation ».

La préparation est transvasée dans un becher de 250 mL. Le becher de 3 litres ayant contenu la préparation est rincé à l'aide d'une pissette d'eau distillée, l'eau de rinçage est versée dans le becher de 250 mL contenant la préparation, puis ce becher est placé dans une étuve à 55°C pendant 72 heures.

Après ces 72 heures de séchage ou dessiccation, le liquide s'est intégralement évaporé, il ne reste donc que le précipité brun qui se trouve sous la forme d'un amalgame sec et gris sombre. Cet amalgame est récupéré puis broyé à l'aide d'un mortier/pilon sous une forme pulvérulente qui est désignée par la suite pour le présent exemple par le terme de « poudre ». Cette poudre peut alors être placée dans un flacon en plastique étiqueté fermé à l'aide d'un bouchon et est stockée dans une enceinte hygrométrique.

Il est notable que contrairement aux procédés connus dans l'état de technique, il n'est pas employé de centrifugeuse pour séparer les particules formées par coprécipitation du liquide. En effet, la Demanderesse a constaté que malgré les soins qui pouvaient être apportés à une telle centrifugation, il restait toujours sur les côtés des éprouvettes utilisés lors de la centrifugation une fraction des plus petites particules du précipité. Or ces particules de faible diamètre moyen jouent un rôle majeur lors des traitements thermiques ultérieurs du procédé (à savoir lors du frittage), en raison de leur forte réactivité qui est due à leur rapport surface/volume qui est relativement grand. Le séchage en étuve (typiquement à une température d'environ 50°C à 55°C) permet ainsi récupérer la quasi-intégralité du produit de la coprécipitation, et tout particulièrement les particules les plus fines.

### Mise en forme (4) de compacts par pressage.

La poudre est utilisée pour élaborer des échantillons, dits « compacts », par méthode dite de pressage. La méthode de pressage consiste en l'enchainement des trois opérations suivantes qui sont détaillées ci-après :
- opération de matriçage,
- opération de compression du lit de poudre, et
- opération d'éjection du compact.

L'opération de matriçage consiste à :
- placer une quantité de poudre, désignée par le terme « lit de poudre » dans le présent exemple, dans une matrice cylindrique creuse en acier, désignée par le terme de « matrice », dont l'extrémité inférieure est bouchée par un poinçon cylindrique, désigné par le terme « poinçon inférieur » dans le présent exemple, et qui a été préalablement introduit de sorte que la poudre ne puisse pas tomber hors de la matrice ; et
- introduire un autre poinçon cylindrique, désigné par l'expression « poinçon supérieur » dans le présent exemple, dans l'extrémité supérieure de la matrice et le placer au contact du lit de poudre.

L'ensemble comprenant la matrice, le lit de poudre, le poinçon inférieur et le poinçon supérieur est désigné par l'expression « matrice de mise en forme » dans le présent exemple.

La matrice de mise en forme est alors placée dans une presse uniaxiale SODEMI RD 60 E avec laquelle l'opération de compression du lit de poudre est effectuée.

L'opération de compression du lit de poudre comporte :
- une montée hydraulique d'un plateau sur lequel repose la matrice de mise en forme : le poinçon supérieur entre alors en contact avec un bâti cylindrique fixe et le lit de poudre est alors comprimé de bas en haut ; la montée du plateau est réalisée en une minute jusqu'à l'atteinte d'une contrainte de compression de 120 MPa appliquée au lit de poudre.
- un maintien de la contrainte de compression pendant une minute ; et
- une diminution progressive de la contrainte, au terme de la durée de maintien, de la contrainte de compression par abaissement du plateau sur lequel repose la matrice de mise en forme en une minute et jusqu'à annulation totale de contrainte de compression.

Le résultat de la compression du lit de poudre est l'obtention d'un compact.

Après relâchement de la compression, il est possible de réaliser l'opération d'éjection du compact qui consiste à :
- retourner la matrice de mise en forme ; et
- faire sortir le compact de la matrice par poussée de haut en bas du poinçon inférieur à l'aide de la presse.

Le compact est récupéré. Sa masse et ses dimensions sont mesurées.

Les opérations de matriçage, de compression du lit de poudre et d'éjection sont répétées afin d'obtenir le nombre de compacts souhaité.

### Frittage (5) des compacts.

La dernière étape pour l'obtention du matériau objet du premier exemple consiste à soumettre les compacts à un traitement thermique qui permettra de consolider les matériaux et à leur conférer leurs propriétés magnéto-diélectriques.

Les compacts sont placés dans un creuset en alumine qui est alors introduit dans un four tubulaire PYROX avec lequel il est possible de programmer le traitement thermique.

Le traitement thermique suivant est programmé et appliqué :
- montée en température à raison de 3°C par minute jusqu'à la température de 950°C ;
- maintien de la température de 950°C pendant 3 heures ;
- descente en température à raison de 3°C par minute jusqu'à la température ambiante.

Ce traitement thermique est désigné dans le présent exemple par l'expression « frittage à 950°C ».

Après le frittage à 950°C, les compacts sont alors désignés par l'expression « compacts frittés ».

Les compacts frittés du matériau objet du présent premier exemple sont alors récupérés.

Ils présentent à température ambiante les propriétés magnéto-diélectriques suivantes dans la plage de fréquence 118-174 MHz:
- une valeur de perméabilité réelle µ' comprise entre 15,6 et 16,6 ;
- une valeur de permittivité réelle ε' comprise entre 13,6 et 12,1 ; et
- une tangente des pertes magnétiques définie par le rapport entre la valeur de la perméabilité imaginaire µ" et la valeur de la perméabilité réelle µ' du matériau objet du présent premier exemple qui est comprise entre 0,034 et 0,044 ;
- une tangente des pertes diélectrique définie par le rapport entre la valeur de la permittivité imaginaire ε" et la valeur de la permittivité réelle ε' du matériau objet du présent premier exemple qui est comprise entre 0,064 et 0,032.

Ainsi, le matériau objet du présent premier exemple répond aux critères requis pour la réalisation d'antennes fixes miniatures dans la gamme de fréquence 118-172 MHz.

### Exemple n°2

Le deuxième exemple détaillé ci-après porte sur l'élaboration du matériau de formule brute Ni_{0,61}Zn_{0,35}Co_{0,04}Fe_{1,98}O₄, sous une forme adaptée à la réalisation d'antennes, notamment pour des gammes de fréquences sub-gigahertz adaptées aux antennes V/UHF.

Le procédé d'élaboration comporte les étapes 1 à 5 suivantes, qui sont détaillées dans le présent exemple :
- Obtention d'un précipité (1) par co-précipitation chimique ;
- Rinçage du précipité (2);
- Séchage et broyage (3) du précipité;
- Mise en forme (4) de compacts par pressage ; et
- Frittage (5) des compacts.

### Obtention d'un précipité (1) par co-précipitation chimique

Le matériau de type ferrite, de formule brute Ni_{0,6}Zn_{0,35}Co_{O,04}Fe_{1,98}O₄, est obtenu sous la forme d'un précipité dans cette première étape par co-précipitation de sels de chlorures dans une solution de soude.

Les sels de chlorures utilisés sont les mêmes que dans le premier exemple.

Selon la composition désirée pour le matériau ferrite, comme dans le premier exemple les différents sels de chlorures sont pesés de sorte à avoir une masse totale de 20 grammes de sels de chlorures, tout en respectant la stœchiométrie des éléments métalliques du matériau final.

Les pesées sont réalisées dans une balance METTLER TOLEDO, modèle XS203S à l'aide d'une coupelle en verre.

La préparation d'un matériau ferrite conforme au présent deuxième exemple à partir de 20 grammes de sels de chlorures nécessite la réalisation des pesées suivantes :
14,515 g de FeCl₃,
3,933 g de NiCl₂,
1,294 g de ZnCl₂, et
0,258 g de CoCl₂.

Chacun des sels est pesé séparément, dans une coupelle en verre, selon le protocole définit dans le premier exemple.

On obtient une solution désignée par l'expression « solution saline ».

Une solution de soude est préparée selon le protocole détaillé pour le premier exemple, aboutissant à l'obtention d'une solution dite « solution basique ».

La solution saline permettant la synthèse du matériau ferrite objet du présent deuxième exemple est versée dans la solution basique.

Les sels de chlorures réagissent avec la soude conduisant à la formation d'un précipité brun de formule chimique brute Ni_{0,61}Zn_{0,35}Co_{0,04}Fe_{1,98}(OH)_{7,94} et de chlorure de sodium NaCl selon la réaction suivante :

0,61 NiCl₂ + 0,35 ZnCl₂ + 0,04 CoCl₂ + 1,98 FeCl₃ + 7,94 NaOH

→7 Ni_{0,61}Zn_{0,35}CO_{0,04}Fe_{1,98}(OH)_{7,94} + 7,94 NaCl

La solution de basique contenant une quantité excessive de soude par rapport à la quantité nécessaire pour réagir avec les sels de chlorures, l'erlenmeyer contient après cette réaction :
- un précipité brun à partir duquel le matériau ferrite sera synthétisé ; et
- le reste de la solution basique n'ayant pas participé à la réaction et du chlorure de sodium NaCl dissout (cet ensemble étant désigné par la suite dans le présent exemple par l'expression « excès de solution basique »).

Tout comme dans le premier exemple Les solutions saline et basique sont laissées à réagir pendant 45 minutes sous agitation et sous ébullition. Au terme des 45 minutes, l'agitation magnétique et la chauffe sont arrêtées et l'erlenmeyer est retiré de la plaque chauffante. Le barreau magnétique est récupéré à l'aide d'un aimant et est rincé à l'eau déionisée. Le contenu de l'erlenmeyer, à savoir le précipité brun et l'excès de de solution basique, est versé dans un becher ayant une contenance de 3 litres. L'intérieur de l'erlenmeyer est rincé à l'aide d'une pissette d'eau distillée et cette eau de rinçage est versée dans le becher contenant le précipité et l'excès de solution basique. Le contenu du becher est laissé à refroidir à température ambiante et jusqu'à ce que le précipité ait sédimenté au fond du becher et que l'excès de solution basique soit clair. Lorsque ces conditions sont remplies, on passe à l'étape de rinçage ou nettoyage du précipité.

### Rinçage du précipité (2)

Des nettoyages successifs du précipité sont réalisés selon le protocole et les critères définis dans le premier exemple.

Il est alors possible de passer à l'étape de séchage et broyage du précipité.

### Séchage et broyage (3) du précipité

Cette étape est identique à celle décrite pour le premier exemple.

### Mise en forme (4) de compacts par pressage

Cette étape est identique à celle décrite pour le premier exemple.

En particulier, les opérations de matriçage, de compression sur lit de poudre et d'éjection du compact sont identiques à celles décrites pour le premier exemple. Elles sont répétées afin d'obtenir le nombre de compacts souhaité.

### Frittage (5) des compacts

Cette étape et en particulier le « frittage à 950°» qui y est mis en oeuvre est identique à celle décrite pour le premier exemple.

Les compacts frittés du matériau objet du présent deuxième exemple sont alors récupérés.

Ils présentent à température ambiante les propriétés magnéto-diélectriques suivantes dans la plage de fréquence 118-174 MHz :
- une valeur de perméabilité réelle µ' comprise entre 19,2 et 21 ;
- une valeur de permittivité réelle ε' comprise entre 13,2 et 13,5 ;
- une tangente des pertes magnétiques définie par le rapport entre la valeur de la perméabilité imaginaire µ" et la valeur de la perméabilité réelle µ' du matériau objet du présent deuxième exemple qui est comprise entre 0,02 et 0,03 ; et
- une tangente des pertes diélectriques définie par le rapport entre la valeur de la permittivité imaginaire ε" et la valeur de la permittivité réelle ε' du matériau objet du présent deuxième exemple de 0,01.

Ainsi, le matériau objet du présent deuxième exemple répond aux critères requis pour la réalisation d'antennes fixes miniatures dans la gamme de fréquence 118-172 MHz.

### Exemple n°3

Le deuxième exemple détaillé ci-après porte sur l'élaboration du matériau de formule brute Ni_{0,61}Zn_{0,35}Co_{0,04}Fe_{1,98}O₄, c'est-à-dire de même formule brute que le matériau de l'exemple n°2, sous une forme adaptée à la réalisation d'antennes, notamment pour des gammes de fréquences sub-gigahertz adaptées aux antennes V/UHF.

Le procédé d'élaboration comporte les mêmes étapes 1 à 5 que les exemples précédents. Pour ce qui concerne les étapes d'obtention d'un précipité (1) par co-précipitation chimique ; de rinçage du précipité (2), de séchage et broyage (3) du précipité, et de mise en forme (4) de compacts par pressage, la description réalisée ci-avant en référence à l'exemple n°2 s'applique à l'exemple n°3.

Des paramètres différents sont néanmoins appliqués dans l'étape de frittage (5) décrite ci-après.

La dernière étape pour l'obtention du matériau objet du troisième exemple, dite frittage (5) des compacts, consiste ainsi à soumettre les compacts à un traitement thermique dans des conditions similaires aux exemples n°1 et n°2 décrits ci-avant. En particulier, le traitement thermique suivant est programmé et appliqué :
- montée en température à raison de 3°C par minute jusqu'à la température de 995°C ;
- maintien de la température de 995°C pendant 1 heure ;
- descente en température à raison de 3°C par minute jusqu'à la température ambiante.

Ce traitement thermique est désigné dans le présent exemple par l'expression « frittage à 995°C ».

Après le frittage à 995°C, les compacts sont alors désignés par l'expression « compacts frittés ».

Les compacts frittés du matériau objet du présent troisième exemple sont alors récupérés.

Ils présentent à température ambiante les propriétés magnéto-diélectriques suivantes dans la plage de fréquence 118-174 MHz :
- une valeur de perméabilité réelle µ' comprise entre 15,6 et 16,6 ;
- une valeur de permittivité réelle ε' comprise entre 12,1 et 12,5 et
- une tangente des pertes magnétiques définie par le rapport entre la valeur de la perméabilité imaginaire µ" et la valeur de la perméabilité réelle µ' du matériau objet du présent troisième exemple qui est comprise entre 0,034 et 0,044 ;
- une tangente des pertes diélectriques définie par le rapport entre la valeur de la permittivité imaginaire ε" et la valeur de la permittivité réelle ε' du matériau objet du présent troisième exemple qui est comprise entre 0,030 et 0,032.

Ainsi, le matériau objet du présent troisième exemple répond aux critères requis pour la réalisation d'antennes fixes miniatures dans la gamme de fréquence 118-172 MHz.

Les matériaux ainsi obtenus sont des céramiques microporeuses semi-denses à porosité contrôlée constituées de particules nanométriques de ferrites spinelles.

Pour ce qui concerne la composition des ferrites obtenues, la présente invention propose selon certains modes de réalisation des ferrites aux propriétés diélectriques sensiblement améliorées comparativement aux ferrites les plus proches connues dans l'état de la technique. En particulier, l'article scientifique de 2009 intitulé « *Influential parameters on electromagnetic properties of nickel-zinc ferrites for antenna miniaturization* » de MM. Souriou et Mattei concerne la synthèse d'un ferrite de composition nominale Ni_{0.5}Zn_{0.3}Co_{0.2}Fe₂O₄.

La composition des matériaux divulgués ci-avant est sensiblement différente. Par exemple, il est divulgué dans le cadre de la présente invention un ferrite spinelle de composition nominale Ni_{0.61}Zn_{0.4}Co_{0.035}Fe_{1.98}O₄. La différence la plus notable entre cette composition et celle connue dans l'art antérieur tient au taux de Fer. La composition sous-stœchiométrique en Fer proposée permet en effet d'abaisser sensiblement les pertes diélectriques. Cela n'est pas immédiatement visible si l'on compare les valeurs mesurées des permittivités des deux matériaux précités, car le matériau décrit dans l'art antérieur présente une porosité élevée, alors que le matériau proposé dans la présente invention est très dense. Cependant la demanderesse a établi, par inter-comparaison des permittivités de matériaux stœchiométriques et non-stœchiométriques de même densité que les compositions sous-stœchiométriques présentent une tangente des pertes diélectriques définie par le rapport entre la valeur de la permittivité imaginaire ε" et la valeur de la permittivité réelle ε' du matériau objet du présent troisième exemple qui est abaissée de par rapport à celle des matériaux stœchiométriques, et en particulier la composition mentionnée ci-dessus présente une tangente des pertes diélectriques qui est abaissée de 30% par rapport à celle des matériaux stœchiométriques.

En particulier, les exemples détaillés ci-dessus permettent la réalisation des matériaux ferrites spinelles magnéto-diélectriques (c'est-à-dire possédant à la fois une susceptibilité magnétique et une permittivité diélectrique non nulles) sous forme céramiques partiellement denses (porosité de 15%-20%) et constituées de grains suffisamment petits (la dimension moyenne des cristallites est de 40nm environ). Cette faible dimension est notamment obtenue grâce au traitement thermique n'excédant pas 1010°C. Les propriétés souhaitées sont également obtenues grâce aux rampes de montée et de descente en température adoptées. Il convient d'adopter une rampe de montée en température adéquate pour réaliser l'apport en énergie thermique nécessaire, mais cet apport ne doit pas être trop rapide pour ne pas créer de microporosité dans le matériau. De même, pendant la descente en température les atomes se disposent dans la maille cristalline, de sorte qu'il convient d'adopter une rampe de descente en température adaptée aux propriétés souhaitées. Tant en montée qu'en descente, une rampe de 3°C environ par minute semble optimale, mais plus généralement des rampes comprises entre 2°C et 4°C par minute (cette valeur pouvant être fixe ou variable entre ces bornes) est acceptable. Une température maximale de l'ordre de 950°C est adéquate, mais une température de 985°C ou plus est préférée car elle évite la présence d'ion Fe²⁺ ce qui permet l'obtention d'un matériau isolant.

La faible dimension des grains permet que l'éventuelle contribution de parois de domaines magnétiques (à savoir la contribution des zones de transition entre deux domaines d'aimantation différentes) à la perméabilité de parois de domaines magnétiques soit fortement limitée. C'est en effet cette contribution qui est à l'origine de l'essentiel des pertes magnétiques lorsque la taille des grains ne dépasse une valeur critique.

La stabilité en température des propriétés souhaitées de tels matériaux a été vérifiée. Ainsi, ces matériaux sont qualifiés en température (entre -50°C et +85°C, c'est-à-dire une plage de température adaptée pour la qualification pour des applications aéronautiques) pour ce qui concerne le maintien des propriétés requises à la constitution d'une antenne, en particulier dans la gamme de fréquence 118-172 MHz.

En outre, certains des matériaux développés sont compatibles de la technologie d'intégration LTCC, selon l'acronyme anglophone pour « Low Temperature Co-fired Ceramic » c'est-à-dire la technologie des céramiques à cuisson simultanée à basse température.

La mise en oeuvre de procédé de fabrication permet ainsi l'obtention de matériaux qui, mis en oeuvre dans la constitution d'une antenne V/UHF permettent une diminution de taille de l'antenne pouvant aller jusque 60% (comparativement à une antenne constituée selon l'état de la technique) tout en conservant les performances requises pour ladite antenne.

Une antenne miniature ainsi constituée présente un grand intérêt dans les applications aéroportées.

De manière plus générale, les matériaux obtenus par un procédé selon l'invention sont particulièrement avantageux lorsque les fréquences adressées sont inférieures à un Gigahertz.

Les pertes électromagnétiques de ces matériaux se maintiennent à des niveaux notablement bas pour un milieu de type céramique, sur cette bande de fréquence, et notamment dans la bande visée plus particulièrement comprise entre 118 MHz et 172 MHz.

Il a en outre été constaté que l'utilisation d'eau chaude dans les étapes de nettoyage du précipité permettent une sédimentation accélérée et finalement un rinçage plus efficace permettant de limiter le nombre de nettoyages du précipité (comparativement aux méthodes de co-précipitation connues dans l'état de la technique). Par exemple, pour l'obtention du critère de pH inférieur à 8, le nombre de nettoyages est divisé par 2 en moyenne (de 10 nettoyages à 5) soit un gain de temps de 50% pour cette étape.

Par eau chaude, on entend de l'eau à la température obtenue selon le protocole décrit à l'étape de nettoyage du précipité dans les exemples détaillés ci-avant, ou plus généralement de l'eau à environ 70°C, ou plus de 70°C.

Contrairement aux procédés connus, il n'est pas nécessaire dans un procédé conforme à l'invention de mettre en oeuvre une étape de chamottage visant à éliminer les liants et préalable à la mise en forme et au frittage. Pour mémoire, le chamottage réalisé dans les procédés selon l'état de la technique comporte une montée en température à une vitesse de 3 K par minute, suivie d'un palier de 3h à une température comprise entre 600°C et 800°C, suivie d'un refroidissement progressif à 3K par minute des poudres issues de la co-précipitation. Il a été découvert que la réalisation d'une étape de chamottage n'offre pas de meilleures caractéristiques au matériau issu d'un procédé conforme à l'invention, pour la réalisation de ferrite spinelle ayant les propriétés souhaitées.

En outre, le chamottage doit être suivi selon l'état de la technique d'un broyage manuel des poudres avant de pouvoir procéder à la mise en forme et au frittage. Cette étape de broyage après chamottage est sans objet dans l'invention, en l'absence de chamottage. Le gain en temps de production est important, de l'ordre de plusieurs heures, et le gain énergétique comparativement aux procédés connus est également important.

L'absence de calcination dans les modes de réalisation préférés de l'invention est un aspect très inhabituel vis-à-vis des procédés généralement employés dans le domaine des céramiques.

Par exemple, dans l'article scientifique de 2009 mentionné ci-dessus, une calcination était systématiquement réalisée.

La demanderesse a néanmoins découvert que, afin d'obtenir un matériau adapté à la formation d'antennes pour des fréquences plus faibles qu'à l'époque de cet artible (typiquement des fréquences inférieures à 180 MHz contre des fréquences allant jusque 850Mhz avec les matériaux présentés dans l'article de 2009), supprimer l'étape de calcination du procédé d'obtention du ferrite spinelle apportait des avantages importants. En effet, la Demanderesse a constaté que c'est au cours de cette étape de calcination (chamottage) que la réactivité des particules est exploitée, dans l'état de la technique, dans le but d'initier des échanges de matière entre particules voisines. Cela est tout particulièrement le cas pour les petites particules, très réactives en raison de leur rapport surface/volume et qui jouent un rôle déclencheur de ces échanges de matière. En supprimant l'étape de calcination le grossissement des particules lors du frittage est limité, ce qui limite l'apparition des parois de domaines magnétiques, et par conséquent limite les pertes magnétiques associées.

En particulier, le matériau obtenu a une faible porosité pour des températures de frittage inférieures à 1000°C. Cela procure corollairement un autre avantage, qui est conséquence de la valeur assez faible de cette température de frittage, à savoir que l'évaporation des ions Zn²⁺ est évitée (celle-ci pouvant se produire à partir de 1050°C).

Les matériaux employés dans un procédé selon l'invention excluent, au moins pour une grande partie des modes de réalisation envisagés, les terres rares, le lithium, etc. et sont classés parmi ceux dont l'empreinte environnementale est relativement faible.

Au final, les matériaux obtenus selon le procédé conforme à l'invention peuvent offrir les caractéristiques et avantages suivants :
- de faibles pertes électromagnétiques (magnétiques et diélectriques) dans la bande de fréquence 118MHz-174MHz, et dans I 'intervalle de température -50°C < T < 85°C ;
- une perméabilité de 3 à 5 fois plus élevée que celle décrite dans la littérature pour des matériaux comparables,
- des coûts faibles tant pour l'obtention des matériaux que pour leur mise en oeuvre ;
- une facilite de réalisation, dans la mesure où un minimum d'équipement technologique est requis, et aucun équipement spécifique ;
- une faible empreinte environnementale notamment pour ce qui concerne le processus de fabrication.

## Revendications

1. Procédé d'obtention d'un ferrite spinelle de nickel zinc cobalt sous forme céramique comportant les étapes successives suivantes :
- obtention d'un précipité (1) d'hydroxydes de fer, de nickel, de zinc et de cobalt par co-précipitation ;
- rinçage du précipité (2) afin d'obtenir un précipité rincé ;
- séchage et broyage (3) du précipité rincé afin d'obtenir une poudre ;
- mise en forme (4) d'un compact par pressage de la poudre ;et
- frittage (5) du compact,
**caractérisé en ce que** l'étape de frittage (5) comporte successivement :
- une montée en température progressive à raison de 2°C à 4°C par minute, depuis une température ambiante et jusqu'à une température maximale comprise entre 950°C et 1010°C,
- un maintien à la température maximale pendant quarante-cinq minutes à trois heures, et de préférence entre quarante-cinq minutes et une heure et quinze minutes, et
- une descente progressive en température à raison de 2°C à 4°C par minute jusqu'à la température ambiante.

2. Procédé selon la revendication 1 dans lequel ladite température maximale est comprise entre 985°C et 1010°C, et est de préférence égale à 995°C.

3. Procédé selon la revendication 1 ou la revendication 2, dans lequel la montée en température est réalisée à raison d'environ 3°C par minute, et la descente en température est réalisée à raison d'environ 3°C par minute.

4. Procédé selon l'une des revendications 1 à 3, dans lequel l'étape de rinçage du précipité (2) comporte une succession de nettoyages du précipité, chaque nettoyage comportant une dilution avec une eau à une température initiale supérieure ou égale à 70°C ou chauffée lors dudit nettoyage du précipité à une température supérieure ou égale à 70°C, suivie d'un refroidissement et d'une sédimentation.

5. Procédé selon l'une des revendication 1 à 4, **caractérisé en ce qu'**il ne comporte pas d'étape de chamottage de la poudre.

6. Procédé selon l'une des revendications 1 à 5, dans lequel l'étape d'obtention du précipité (1) comprend un mélange d'une solution saline de chlorure de fer III FeCl₃, de chlorure de zinc ZnCl₂ et de chlorure de cobalt CoCl₂ et d'une solution de soude.

7. Procédé selon la revendication 6, dans lequel l'étape l'obtention du précipité (1) met en oeuvre la réaction :
0,60 NiCl₂ + 0,35 ZnCl₂ + 0,05 CoCl₂ + 1,98 FeCl₃ + 7,94 NaOH
→7 Ni_{0,60}Zn_{0,35}Co_{0,05}Fe_{1,98}(OH)_{7,94} + 7,94 NaCl.
ou la réaction :
0,61 NiCl₂ + 0,35 ZnCl₂ + 0,04 CoCl₂ + 1,98 FeCl₃ + 7,94 NaOH
→7 Ni_{0,61}Zn_{0,35}Co_{0,04}Fe_{1,98}(OH)_{7,94} + 7,94 NaCl.

8. Procédé selon la revendication 6 ou la revendication 7, dans lequel, lors de l'étape de rinçage du précipité (2), des nettoyages successifs du précipité sont réalisés au rythme d'un nettoyage par jour environ jusqu'à l'obtention d'un pH inférieur à 8 après sédimentation.

9. Procédé selon l'une des revendications précédentes, dans lequel l'étape de mise en forme (4) d'un compact comporte une opération de matriçage, une opération de compression sur lit de poudre, et une opération d'éjection du compact.

10. Procédé de fabrication d'une antenne destinée à des fréquences inférieures à un gigahertz mettant en oeuvre un procédé d'obtention d'un ferrite spinelle de nickel zinc cobalt sous forme céramique selon l'une quelconque des revendications précédentes.

## Patentansprüche

1. Verfahren zur Gewinnung eines Nickel-Zink-Kobalt-Ferritspinells in keramischer Form, umfassend folgende aufeinanderfolgende Schritte:
- Gewinnung eines Fällungsstoffs (1) aus Eisen-, Nickel-, Zink- und Kobalthydroxiden durch Co-Fällung;
- Spülung des Fällungsstoffs (2), um einen gespülten Fällungsstoff zu gewinnen;
- Trocknung und Zerkleinerung (3) des gespülten Fällungsstoffs, um ein Pulver zu gewinnen;
- Formen (4) eines Presslings durch Pressen des Pulvers; und
- Sintern (5) des Presslings,
**dadurch gekennzeichnet, dass** der Schritt des Sinterns (5) nacheinander Folgendes umfasst:
- einen allmählichen Temperaturanstieg mit einer Rate von 2 °C bis 4 °C pro Minute ab einer Umgebungstemperatur bis zu einer Höchsttemperatur zwischen 950 °C und 1010 °C,
- ein Halten auf der Höchsttemperatur für fünfundvierzig Minuten bis drei Stunden, vorzugsweise zwischen fünfundvierzig Minuten und einer Stunde und fünfzehn Minuten, und
- einen allmählichen Temperaturabfall mit einer Rate von 2 °C bis 4 °C pro Minute bis zu der Umgebungstemperatur.

2. Verfahren nach Anspruch 1, wobei die Höchsttemperatur zwischen 985 °C und 1010 °C liegt und vorzugsweise 995 °C beträgt.

3. Verfahren nach Anspruch 1 oder 2, bei dem der Temperaturanstieg mit einer Rate von etwa 3°C pro Minute durchgeführt wird und der Temperaturabfall mit einer Rate von etwa 3°C pro Minute durchgeführt wird.

4. Verfahren nach einem der Ansprüche 1 bis 3, wobei der Schritt der Spülung des Fällungsstoffs (2) eine Abfolge von Reinigungen des Fällungsstoffs umfasst, wobei jede Reinigung eine Verdünnung mit Wasser mit einer Anfangstemperatur von größer gleich 70 °C oder erwärmt bei der Reinigung des Fällungsstoffs mit einer Temperatur von größer gleich 70 °C umfasst, gefolgt von einer Kühlung und einer Sedimentation.

5. Verfahren nach einem der Ansprüche 1 bis 4, **dadurch gekennzeichnet, dass** es keinen Schritt zum Schamottieren des Pulvers umfasst.

6. Verfahren nach einem der Ansprüche 1 bis 5, wobei der Schritt zur Gewinnung des Fällungsstoffs (1) eine Mischung aus einer Salzlösung aus Eisen(III)-chlorid FeCI₃, Zinkchlorid ZnCI₂ und Kobaltchlorid CoCl₂ und einer Natriumhydroxidlösung umfasst.

7. Verfahren nach Anspruch 6, wobei der Schritt der Gewinnung des Fällungsstoffs (1) folgende Reaktion umsetzt:
0,60 NiCl₂ + 0,35 ZnCl₂ + 0,05 CoCl₂ + 1,98 FeCl₃ + 7,94 NaOH
->7 Ni_{0,60}Zn_{0,35}Co_{0,o5}Fe_{1,98} (OH) 7,94 + 7,94 NaCl.
oder die Reaktion:
0,61 NiCl₂ + 0,35 ZnCl₂ + 0,04 CoCl₂ + 1,98 FeCl₃ + 7,94 NaOH
->7 Ni_{0,61}Zn_{0,35}Co_{0,04}Fe_{1,98} (OH) 7,94 + 7,94 NaCl.

8. Verfahren nach Anspruch 6 oder Anspruch 7, wobei beim Schritt der Spülung des Fällungsstoffs (2) sukzessive Reinigungen des Fällungsstoffs im Rhythmus von etwa einer Reinigung pro Tag durchgeführt werden, bis nach der Sedimentation ein pH-Wert von weniger als 8 erreicht wird.

9. Verfahren nach einem der vorhergehenden Ansprüche, wobei der Schritt des Formens (4) eines Presslings einen Stanzvorgang, einen Pulverbett-Kompressionsvorgang und einen Auswurfvorgang des Presslings umfasst.

10. Verfahren zur Herstellung einer Antenne für Frequenzen unter einem Gigahertz, bei dem ein Verfahren zur Gewinnung eines Nickel-Zink-Kobalt-Ferritspinells in keramischer Form nach einem der vorhergehenden Ansprüche eingesetzt wird.

## Claims

1. A method for obtaining a nickel zinc cobalt spinel ferrite in ceramic form, comprising the following successive steps:
- obtaining a precipitate (1) of iron, nickel, zinc and cobalt hydroxides by co-precipitation;
- rinsing the precipitate (2) in order to obtain a rinsed precipitate;
- drying and grinding (3) the rinsed precipitate in order to obtain a powder;
- shaping (4) a compact by pressing the powder; and
- sintering (5) the compact,
**characterised in that** the sintering step (5) successively comprises:
- a gradual increase in temperature at a rate of 2°C to 4°C per minute, from an ambient temperature to a maximum temperature between 950°C and 1010°C,
- holding at the maximum temperature for forty-five minutes to three hours, and preferably between forty-five minutes and one hour and fifteen minutes, and
- a progressive decrease in temperature at a rate of 2°C to 4°C per minute down to the ambient temperature.

2. The method according to claim 1, wherein said maximum temperature is between 985°C and 1010°C, and is preferably equal to 995°C.

3. The method according to claim 1 or claim 2, wherein the increase in temperature is carried out at a rate of approximately 3°C per minute, and the decrease in temperature is carried out at a rate of approximately 3°C per minute.

4. The method according to one of claims 1 to 3, wherein the step of rinsing the precipitate (2) comprises a succession of precipitate cleaning operations, each cleaning operation comprising a dilution with water at an initial temperature greater than or equal to 70°C or heated during said precipitate cleaning operation to a temperature greater than or equal to 70°C, followed by cooling and settling.

5. The method according to one of claims 1 to 4, **characterised in that** it does not comprise a step of grog tempering the powder.

6. The method according to one of claims 1 to 5, wherein the step of obtaining the precipitate (1) comprises mixing a salt solution of iron III chloride FeCI₃, zinc chloride ZnCI₂ and cobalt chloride CoCl₂ and a sodium hydroxide solution.

7. The method according to claim 6, wherein the step of obtaining the precipitate (1) implements the reaction:
0.60 NiCl₂ + 0.35 ZnCl₂ + 0.05 CoCl₂ + 1.98 FeCl₃ + 7.94 NaOH
->7 Ni_{0.60}Zn_{0.35}Co_{0.05}Fe_{1.98}(OH)_{7.94} + 7.94 NaCl.
or the reaction:
0.61 NiCl₂ + 0.35 ZnCl₂ + 0.04 CoCl₂ + 1.98 FeCl₃ + 7.94 NaOH
->7 Ni_{0.61}Zn_{0.35}Co_{0.04}Fe_{1.98}(OH)_{7.94} + 7.94 NaCl.

8. The method according to claim 6 or claim 7, wherein, during the step of rinsing the precipitate (2), successive cleaning operations of the precipitate are carried out at the rate of approximately one cleaning operation per day until a pH of less than 8 is obtained after settling.

9. The method according to one of the preceding claims, wherein the step of shaping (4) a compact comprises a coining operation, a powder bed compression operation, and a compact ejection operation.

10. A method for manufacturing an antenna intended for frequencies lower than one gigahertz implementing a method for obtaining a nickel zinc cobalt spinel ferrite in ceramic form according to any one of the preceding claims.
